# FASCICULE DE BREVET EUROPEEN

(11) **EP 3 877 253 B1**
(45) Date de publication et mention de la délivrance du brevet: **11.01.2023**
(21) Numéro de dépôt: 19801268.4
(22) Date de dépôt: 06.11.2019
(51) Int. Cl.: B64C 1/14, E05B 65/10

(54) **DISPOSITIF D'OUVERTURE D'URGENCE D'UNE PORTE D'AÉRONEF, À DÉBRAYAGE PAR POIGNÉE**
NOTÖFFNUNGSVORRICHTUNG FÜR EINE FLUGZEUGTÜR MIT HANDGRIFFFREIGABE
EMERGENCY OPENING DEVICE FOR AN AIRCRAFT DOOR, WITH HANDLE RELEASE

(30) Priorité: 08.11.2018 FR 1860284
(43) Date de publication de la demande: 15.09.2021
(73) Titulaire: Latecoere, 31500 Toulouse, Occitanie (FR)
(72) Inventeur: CAPRON, Nicolas, 31320 CASTANET TOLOSAN OCCITANIE (FR)
(74) Mandataire: Junca & Associes
(86) Numéro de dépôt international: PCT/EP2019/080343
(87) Numéro de publication internationale: WO 2020/094695

(56) Documents cités:
- EP-A1- 3 219 603
- EP-A1- 3 323 709
- FR-A1- 2 319 758
- FR-A1- 2 975 967

## Description

### DOMAINE TECHNIQUE

L'invention concerne le domaine de l'aéronautique et a trait à un dispositif d'ouverture d'urgence d'une porte d'aéronef dotée d'un mécanisme d'ouverture.

Les portes d'aéronef sont munies d'un mécanisme d'ouverture pour permettre la sortie et l'entrée de passagers ou pour permettre l'évacuation en cas d'urgence. En cas d'évacuation d'urgence des passagers, les portes d'aéronefs, qu'elles soient des portes de passagers ou des portes d'évacuation d'urgence, comportent usuellement un dispositif d'ouverture d'urgence qui, s'il est activé, provoque une ouverture rapide et automatique des portes, sans nécessiter d'intervention humaine autre que son activation.

De tels dispositifs d'ouverture d'urgence comprennent classiquement des moyens d'actionnement du mécanisme d'ouverture de la porte, commutables entre un état passif et un état actif provoquant l'ouverture de la porte, et des moyens d'activation des moyens d'actionnement permettant à un utilisateur de déclencher l'ouverture d'urgence.

### ART ANTÉRIEUR

La demande de brevet FR2975967 décrit un dispositif d'ouverture d'urgence d'aéronef qui consiste en des moyens d'actionnement de conception essentiellement mécaniques mettant en œuvre des moyens élastiques de compression et permettant de se passer d'éléments pneumatiques, hydrauliques ou pyrotechniques. Le dispositif d'ouverture d'urgence décrit rempli de plus une fonction d'ouverture de service permettant à la porte de s'ouvrir et se fermer en fonctionnement normal, c'est à dire hors des phases d'ouverture d'urgence. Après une phase d'ouverture d'urgence, la porte d'aéronef peut être refermée en réarmant le dispositif d'ouverture d'urgence à l'aide d'un outil par lequel une tige filetée est vissée, provoquant la compression des moyens élastiques de compression.

### EXPOSÉ DE L'INVENTION

L'invention a pour but d'améliorer les dispositifs d'ouverture d'urgence de porte d'aéronef de l'art antérieur.

A cet effet, l'invention vise un dispositif d'ouverture d'urgence d'une porte d'aéronef dotée d'un mécanisme d'ouverture, comprenant :
- des moyens d'actionnement du mécanisme d'ouverture, commutables entre un état passif et un état actif d'activation du mécanisme d'ouverture, et comprenant : un organe de manœuvre tubulaire doté d'une première extrémité de liaison avec la porte, et d'une deuxième extrémité de verrouillage ; des moyens élastiques de compression disposés entre un élément de butée fixe et l'organe de manœuvre ; un organe de retenue de la deuxième extrémité de verrouillage, mobile entre une position fermée de verrouillage de la deuxième extrémité de verrouillage, dans une position de l'organe de manœuvre correspondant à l'état passif des moyens d'actionnement dans laquelle les moyens élastiques sont maintenus comprimés, et une position ouverte de libération de la deuxième extrémité de verrouillage autorisant le déplacement de l'organe de manœuvre selon un axe de déplacement vers une position correspondant à l'état actif des moyens d'actionnement, sous l'effet de l'effort résultant de l'expansion des moyens élastiques ;
- des moyens d'activation des moyens d'actionnement adaptés pour entrainer l'ouverture de l'organe de retenue ;

Dans ce dispositif :
- l'organe de manœuvre comporte un élément de première extrémité et un élément de deuxième extrémité mobiles en translation l'un par rapport à l'autre suivant l'axe de déplacement, la première extrémité de l'organe de manœuvre étant située sur l'élément de première extrémité et la deuxième extrémité de verrouillage de l'organe de manœuvre étant située sur l'élément de deuxième extrémité ;
- l'élément de première extrémité comporte une butée d'entrainement amovible présentant une première face de contact avec l'élément de deuxième extrémité.

Dans la présente description et les revendications, l'expression « liaison avec la porte » s'entend relativement à la porte d'aéronef au sens large. La porte d'aéronef au sens large inclut l'ouvrant de la porte, le mécanisme d'ouverture de porte, ou encore la structure encadrant la porte et reliée au fuselage (correspondant au chambranle de la porte). Ainsi, la première extrémité de l'organe d'actionnement est reliée à un élément de la porte (ouvrant, mécanisme d'ouverture, ou structure encadrante) et l'élément de butée fixe est reliée à un autre élément de la porte (ouvrant, mécanisme d'ouverture, ou structure encadrante) tels que l'expansion des moyens élastiques provoque l'actionnement du mécanisme d'ouverture de la porte, et l'ouverture effective de la porte. Par exemple, la première extrémité de l'organe d'actionnement peut être fixée sur le mécanisme d'ouverture de la porte, et l'élément de butée fixe peut être fixé sur l'ouvrant de la porte. Autre exemple, la première extrémité de l'organe d'actionnement peut être fixée sur l'ouvrant de la porte, et l'élément de butée fixe peut être fixé sur la structure encadrante de la porte.

Un tel dispositif d'ouverture d'urgence présente tous les avantages d'un dispositif mécanique tel que décrit dans le document FR2975967. La conception mécanique des moyens d'actionnement ne requiert pas de maintenance particulière en l'absence d'utilisation du dispositif d'ouverture. L'utilisation du dispositif d'ouverture n'implique pas qu'un organe de déclenchement doive être remplacé, comme avec les dispositifs pneumatiques ou pyrotechniques. Aucun fluide moteur n'est nécessaire pour activer les moyens d'actionnement.

Le dispositif d'ouverture d'urgence selon l'invention présente de plus une masse et un encombrement réduit. Toutes les fonctions liées au déclenchement de l'ouverture d'urgence ainsi qu'à l'ouverture de service sont regroupées autour d'un même axe de déplacement de l'organe d'actionnement. Un tel dispositif forme un produit fini de type vérin mécanique entièrement autonome, ce qui est un gage de fiabilité et de sureté de fonctionnement appréciables dans le domaine de l'aéronautique et plus particulièrement des dispositifs d'ouverture de secours. En plus du gain de masse, qui est une caractéristique critique dans l'aéronautique, la compacité du dispositif permet son installation au sein de portes d'aéronefs complexes, comportant de nombreux équipements tels que dispositifs de sécurité, hublots, dispositifs de vision, dispositifs d'assistance divers, capotages esthétiques, etc.

La fonction d'ouverture de service est remplie par des moyens particulièrement compacts faisant partie de l'organe de manœuvre. L'agencement de l'organe de manœuvre qui est constitué d'un élément de première extrémité et d'un élément de deuxième extrémité, permet la mise en œuvre de cette fonction d'ouverture de service lorsque le dispositif d'ouverture d'urgence est à l'état passif, c'est-à-dire lors du fonctionnement normal de la porte d'aéronef. La porte d'aéronef peut ainsi être ouverte et fermée de manière classique pour permettre l'embarquement et le débarquement des passagers et le verrouillage de la porte lors du vol de l'aéronef. De plus, les moyens permettant cette ouverture de service sont ici mis à profit pour remplir une fonction supplémentaire de débrayage du dispositif d'ouverture d'urgence. En effet, en cas d'ouverture d'urgence, les moyens d'actionnement du mécanisme d'ouverture sont commutés dans leur état actif ce qui entraine l'ouverture rapide de la porte sous l'effet des moyens élastiques de compression. Suite à cette ouverture, d'urgence, la porte est maintenue en position ouverte sous l'effet de la sollicitation continue des moyens élastiques de compression. Le débrayage du dispositif d'ouverture d'urgence permet de refermer la porte d'aéronef rapidement, sans devoir réarmer ce dernier, c'est-à-dire sans devoir comprimer à nouveau les moyens élastiques de compression. Les moyens élastiques de compression, prévus pour une ouverture rapide de la porte d'aéronef, présentent un fort tarage qui rend le réarmement du dispositif d'ouverture d'urgence long et difficile.

Le débrayage du dispositif d'ouverture d'urgence permet par exemple, lors des opérations de maintenance, de tester le dispositif d'urgence en l'activant et en pouvant cependant par la suite refermer facilement et rapidement la porte d'aéronef par l'action d'un seul opérateur. De plus, en cas d'ouverture d'urgence, il peut arriver que le membre de l'équipage ayant activé le dispositif d'ouverture d'urgence, constate après l'ouverture rapide de la porte que cette dernière s'est ouverte sur un environnement dangereux. Dans ce cas, le débrayage du dispositif d'ouverture d'urgence permet à ce membre de l'équipage de refermer immédiatement la porte en agissant directement sur la butée amovible et en refermant manuellement la porte. Dans ces conditions, la porte d'aéronef peut être manœuvrée en fermeture et en ouverture normalement bien que le dispositif d'ouverture d'urgence ait été déclenché. Cela permet non seulement la fermeture d'urgence de la porte d'aéronef comme décrit précédemment mais aussi un redécollage de l'appareil jusqu'à une prochaine opération de maintenance où le dispositif d'ouverture d'urgence sera réarmé.

Bien que le dispositif d'ouverture d'urgence intègre ces fonctions supplémentaires d'ouverture de service et de débrayage, il reste entièrement mécanique garantissant un fonctionnement indépendant de toute source d'énergie ainsi qu'une fiabilité accrue.

Le dispositif d'ouverture d'urgence peut comporter les caractéristiques additionnelles suivantes, seules ou en combinaison :
- l'élément de première extrémité comporte une portion cylindrique externe emboitable dans une portion cylindrique interne de l'élément de deuxième extrémité ;
- la butée d'entrainement amovible est montée dans une gorge pratiquée dans la portion cylindrique externe de l'élément de première extrémité ;
- l'élément de première extrémité comporte au moins un méplat, et en ce que la butée d'entrainement amovible comporte une surface plane maintenue contre ce méplat ;
- l'élément de première extrémité comporte deux méplats diamétralement opposés, et en ce que la section de la butée d'entrainement amovible présente une portion de cercle prolongée par deux portions droites ajustées à l'écartement des méplats, ainsi qu'une portion ouverte permettant le retrait de la butée d'entrainement amovible par rapport à l'élément de première extrémité ;
- la butée d'entrainement amovible comporte un élément élastique de retenue contre l'élément de première extrémité ;
- la butée d'entrainement amovible comporte une poignée ;
- l'élément de deuxième extrémité comporte une collerette d'appui des moyens élastiques de compression, cette collerette présentant une face d'appui coopérant avec la première face de contact de la butée d'entrainement amovible ;
- le dispositif comporte un cylindre de coulissement coaxial avec l'axe de déplacement, l'élément de première extrémité et l'élément de deuxième extrémité étant montés coulissants sur ce cylindre de coulissement ;
- le cylindre de coulissement comporte une butée de fin de course pour l'organe de manœuvre ;
- l'élément de première extrémité comporte une chambre tubulaire d'admission du cylindre de coulissement ;
- la chambre tubulaire d'admission comporte un orifice d'équilibrage des pressions ;
- le cylindre de coulissement comporte une première portion creuse munie d'un orifice d'équilibrage des pressions ;
- l'orifice d'équilibrage des pressions de la chambre tubulaire d'admission et l'orifice d'équilibrage des pressions du cylindre de coulissement sont tous deux alignés sur l'axe de déplacement ;
- l'élément de première extrémité et l'élément de deuxième extrémité sont montés chacun sur le cylindre de coulissement par une bague de friction ;
- le cylindre de coulissement comporte une première portion et une deuxième portion de sections différentes, l'élément de première extrémité étant monté coulissant sur la première portion et l'élément de deuxième extrémité étant monté sur la deuxième portion ;
- le cylindre de coulissement est fixé sur l'élément de butée fixe ;
- la butée de fin de course est réalisée par une rainure pratiquée dans le cylindre de coulissement, dans laquelle est inséré un doigt axial de retenue solidaire de la deuxième extrémité de l'organe de manœuvre.

### PRÉSENTATION DES FIGURES

D'autres caractéristiques et avantages de l'invention ressortiront de la description qui en est faite ci-après, à titre indicatif et nullement limitatif, en référence aux dessins annexés, dans lesquels :
[Fig.1] La figure 1 représente en perspective un dispositif d'ouverture d'urgence d'une porte d'aéronef, selon l'invention, dans son état passif ;
[Fig.2] La figure 2 est une vue en coupe du dispositif de la figure 1 ;
[Fig.3] La figure 3 représente en perspective le dispositif de la figure 1 dans son état actif ;
[Fig.4] La figure 4 est une vue en coupe du dispositif de la figure 3 ;
[Fig.5] La figure 5 est une vue en coupe du dispositif de la figure 1 illustrant la fonction d'ouverture de service ;
[Fig.6] la figure 6 représente en perspective la butée amovible du dispositif des figures 1 à 5 ;
[Fig.7] la figure 7 représente une coupe transversale du dispositif de la figure 3 montrant une section au niveau de la butée amovible ;
[Fig.8] La figure 8 représente en perspective le dispositif de la figure 3 et illustre la manœuvre de la butée amovible en vue du passage en mode débrayé ;
[Fig.9] La figure 9 représente le dispositif de la figure 7 en mode débrayé ;
[Fig.10] La figure 10 est une vue en coupe du dispositif de la figure 9.

### DESCRIPTION DÉTAILLÉE

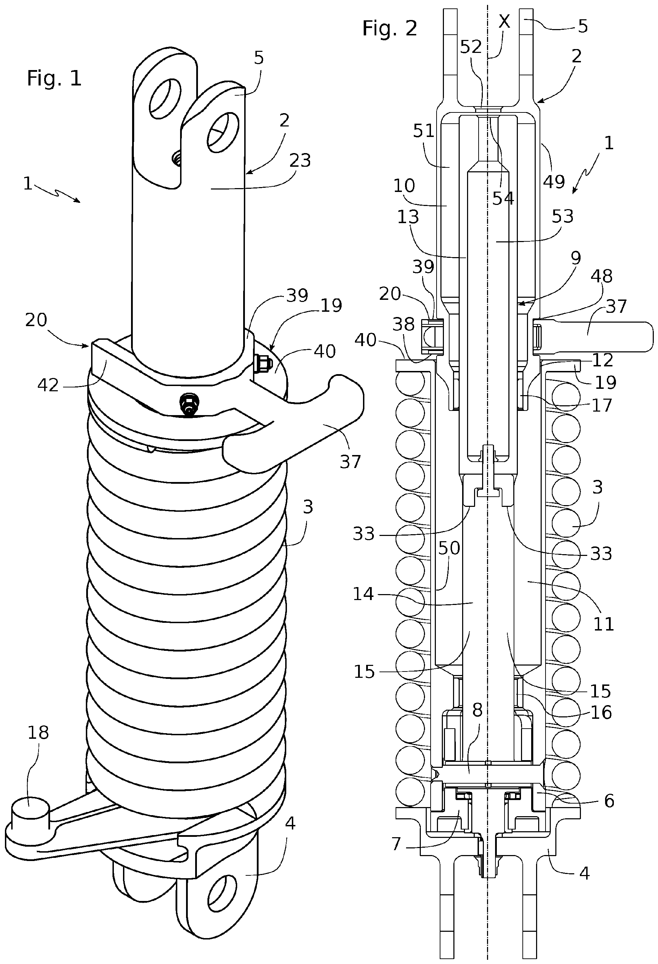

Les figures 1 et 2 représentent un dispositif d'ouverture d'urgence 1 selon l'invention dans son état passif. Ce dispositif 1 se présente sous la forme d'un actionneur compact adapté à provoquer l'ouverture d'urgence d'une porte d'aéronef dotée d'un mécanisme d'ouverture. Les portes d'aéronef sont généralement dotées d'un mécanisme d'ouverture comportant par exemple des systèmes de charnières et de bras de support permettant à la porte d'aéronef d'être mobile entre une position fermée et une position ouverte. Ce mécanisme d'ouverture est utilisé pour une ouverture manuelle ou motorisée de la porte d'aéronef en vue des opérations normales d'embarquement et de débarquement de passagers. Le dispositif 1 permet l'ouverture d'urgence automatique de la porte d'aéronef. A cet effet, le dispositif 1 comporte des moyens d'actionnement du mécanisme d'ouverture de la porte d'aéronef, ces moyens d'actionnement comportant un organe de manœuvre tubulaire 2 ainsi que des moyens élastiques de compression qui sont, dans le présent exemple, constitués d'un ressort 3 d'un tarage suffisant pour provoquer l'ouverture rapide de la porte d'aéronef en situation d'urgence.

L'organe de manœuvre 2 est doté d'une première extrémité 5 de liaison avec la porte et le ressort 3 est disposé entre un élément de butée fixe 4 et l'organe de manœuvre 2. Le ressort 3, dans l'état actif du dispositif 1, provoque un écartement entre l'élément de butée fixe 4 et la première extrémité 5 de l'organe de manœuvre. Ainsi, le dispositif 1 peut être monté au sein du mécanisme d'ouverture de la porte d'aéronef, par une première fixation au niveau de la première extrémité 5 de l'organe de manœuvre 2 et par une deuxième fixation au niveau de l'élément de butée fixe 4 dans une disposition où l'écartement entre ces deux fixations provoque l'ouverture de la porte.

L'organe de manœuvre 2 comporte de plus une deuxième extrémité dite de verrouillage. Cette deuxième extrémité 6 est adaptée à coopérer avec un organe de retenue constitué ici d'un crochet rotatif 7 pour maintenir le dispositif dans son état passif, prêt à être activé, le ressort 3 étant comprimé. La deuxième extrémité 6 de l'organe de manœuvre 2 comporte un doigt axial de retenue 8 fixé transversalement sur la deuxième extrémité 6 et le crochet rotatif 7 est adapté à retenir ce doigt 8 lorsque le dispositif 1 est dans son état passif. Le crochet rotatif 7 retient ainsi l'organe de manœuvre 2 en maintenant comprimé le ressort 3.

Le crochet rotatif 7 est associé à un levier 18 qui, lorsqu'il est actionné en vue d'obtenir l'ouverture d'urgence, entraine la rotation du crochet 7 et la libération du doigt 8 autorisant alors la détente du ressort 3 et par conséquent le passage du dispositif 1 à sa position active.

Le dispositif 1 comporte un cylindre de coulissement 9 fixé sur l'élément de butée fixe 4 et constituant un axe permettant le coulissement de l'organe de manœuvre 2 par rapport à l'élément de butée fixe 4, suivant un axe de déplacement X.

L'organe de manœuvre 2 est ici réalisé en deux parties : un élément de première extrémité 10 sur lequel est située la première extrémité 5, et un élément de deuxième extrémité 11 sur lequel est située la deuxième extrémité 6.

Le cylindre de coulissement 9 comporte une première portion 13 tubulaire et une deuxième portion 14 tubulaire. Dans le présent exemple, la deuxième portion 14 présente un diamètre supérieur à la première portion 13. La deuxième portion 14 présente de plus une rainure 15 débouchante dans laquelle le doigt 8 est engagé.

Le coulissement de l'organe de manœuvre 2 sur le cylindre de coulissement 9 est assuré d'une part par une bague de friction 16 guidant le coulissement de l'élément de deuxième extrémité 11 sur la deuxième portion 14, et d'autre part par une bague de friction 17 guidant le coulissement de l'élément de première extrémité 10 sur la première portion 13. Le crochet rotatif 7 est également monté tournant sur le cylindre de coulissement 9.

L'élément de deuxième extrémité 11 comporte, à son extrémité opposée à la deuxième extrémité 6, une collerette 19 d'appui du ressort 3. Sur les figures 1 et 2, le ressort est donc comprimé entre la collerette 19 et l'élément de butée fixe 4.

L'élément 10 de première extrémité comporte une butée amovible 20 munie d'une poignée 37. La butée amovible comporte une première face de contact 38 avec l'élément 11 de deuxième extrémité. La première face de contact 38 est disposée en vis-à-vis d'une face d'appui 40 de la collerette 19 de sorte que la translation de l'élément de deuxième extrémité 11 suivant l'axe de déplacement X, lorsque le dispositif est déclenché, entraine également en translation l'élément 10 de première extrémité par l'intermédiaire de la butée amovible 20. Dans la configuration des figures 1 et 2, la butée amovible 20 est en place sur l'élément de deuxième extrémité 11. Lors de la manœuvre du levier 18 par un utilisateur en vue de déclencher l'ouverture d'urgence, le crochet rotatif 7 libère le doigt 8 et permet l'expansion du ressort 3. Sous la charge du ressort 3, sur la collerette 19, l'élément de deuxième extrémité 11 se translate suivant l'axe de déplacement X. L'élément de deuxième extrémité 11 entraine avec lui en translation la butée amovible 20 grâce à la première face de contact 38. La butée amovible 20 entraine quant à elle l'élément 10 de première extrémité par l'intermédiaire d'une deuxième face de contact 39 disposée contre une surface d'entrainement 41 de l'élément 10 de première extrémité.

La force permettant l'ouverture d'urgence de la porte d'aéronef est ainsi transmise du ressort 3 à la collerette 19, puis à la butée amovible 20 par la première face de contact 38, et à l'élément de première extrémité 5 par la deuxième face de contact 39.

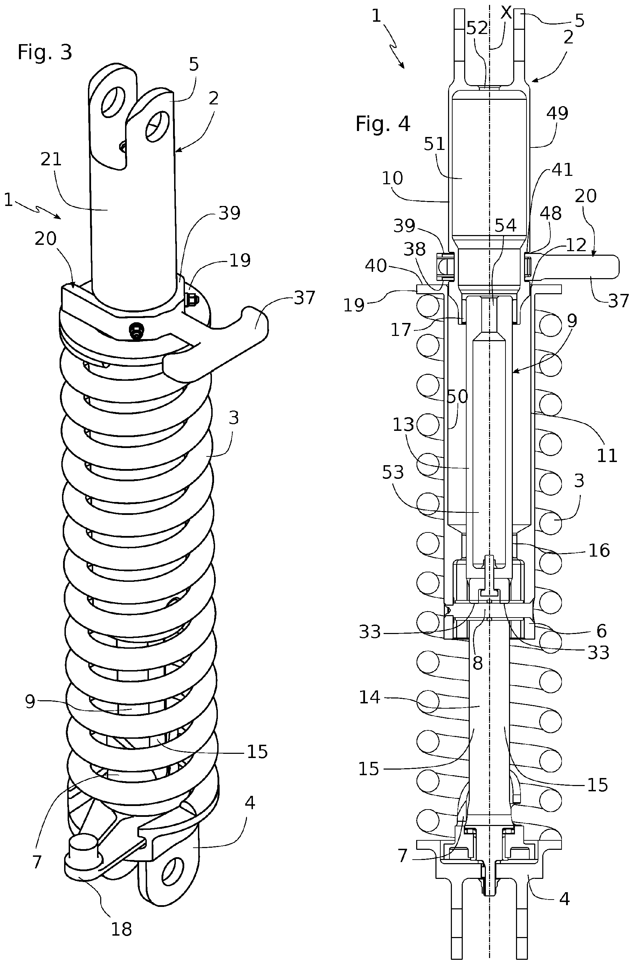

L'activation du dispositif 1 conduit alors à la position des figures 3 et 4 correspondant à l'ouverture totale de la porte d'aéronef. Cette position a été atteinte grâce à la pression de la collerette 19 sur la butée amovible 20 et de la butée amovible 20 sur l'élément de première extrémité 10. Cependant, en fin de course, tel que représenté aux figures 3 et 4, le doigt axial de retenue 8 vient en butée contre l'extrémité 33 de la rainure 15. Cette extrémité 33 de la rainure 15 constitue une butée de fin de course pour le mouvement d'expansion du ressort 3.

Selon une caractéristique préférée, l'organe de manœuvre 2 comporte ainsi une butée de fin de course 33 limitant son déplacement sous l'effet de la poussée du ressort 3, ce qui libère la pression sur la butée amovible en fin d'activation du dispositif afin de permettre le retrait de la butée amovible 20. Dans la position de fin de course des figures 3 et 4, le ressort 3 est contenu entre la collerette 19 et l'élément de butée fixe 4 grâce au maintien du doigt 8 contre l'extrémité de la rainure 15. Le ressort 3 n'exerce donc plus de pression sur la butée amovible 20.

Le passage du dispositif 1 de son état passif des figures 1 et 2 à son état activé des figures 3 et 4 illustre le fonctionnement du dispositif 1 lors de son déclenchement en vue de l'ouverture d'urgence de la porte d'aéronef.

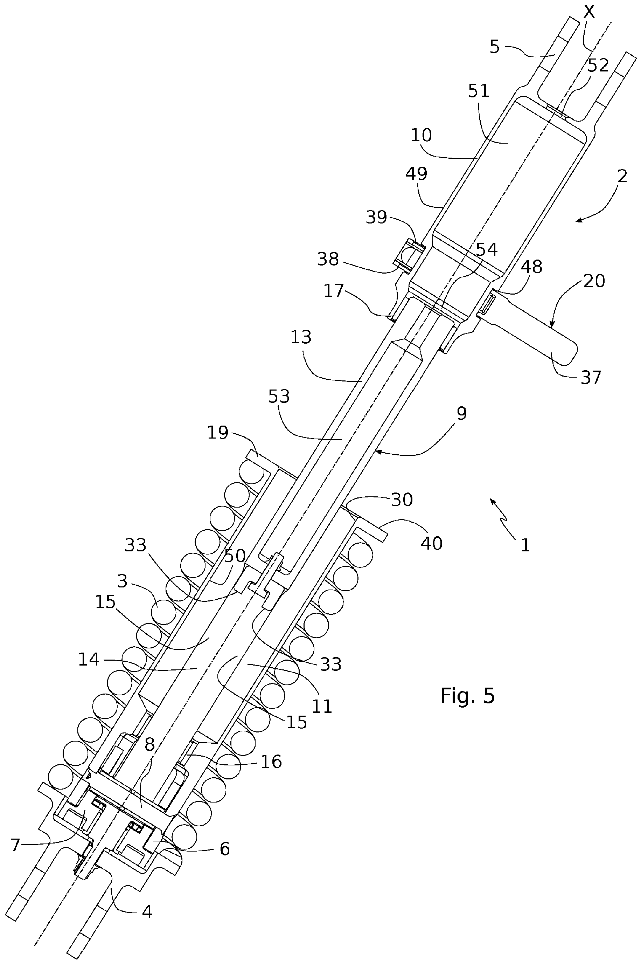

La figure 5 illustre une fonction supplémentaire du dispositif 1 selon laquelle le dispositif 1 remplit une fonction d'ouverture de service. Selon cette fonction d'ouverture de service, l'élément de première extrémité 10 coulisse librement le long de la première portion 13 du cylindre de coulissement 9 tandis que l'élément de deuxième extrémité 11 est maintenu en place par le crochet rotatif 7. Durant ce coulissement permettant la fonction d'ouverture de service, les éléments 10, 11 peuvent s'emboiter et se déboiter au niveau de la zone 12.

Cette possibilité de coulissement de l'élément de première extrémité 10 permet l'ouverture et la fermeture de la porte dans les conditions normales d'opération, sans que le dispositif 1 ne soit déclenché.

Le dispositif 1 remplit de plus une autre fonction dite de débrayage et permettant, lorsque le dispositif 1 est dans sa position de fin de course des figures 3 et 4 suite au déclenchement de l'ouverture d'urgence de la porte, de refermer immédiatement la porte d'aéronef.

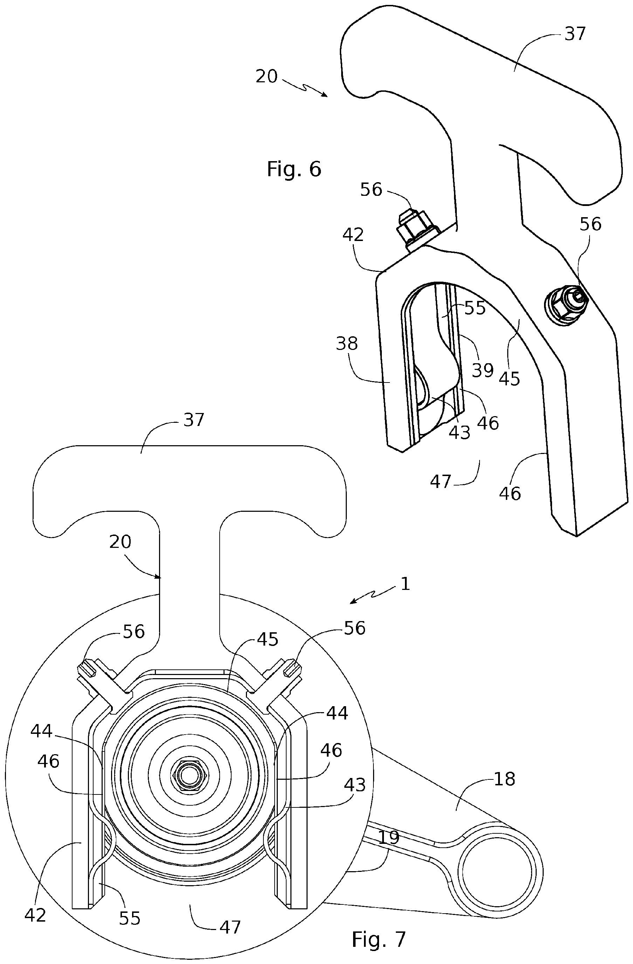

La figure 6 représente en perspective la butée amovible 20. Cette butée 20 comporte un corps 42 et une poignée 37. Les première et deuxième faces de contact sont situées de part et d'autre du corps 42.

Le corps 42 comporte par ailleurs une rainure 55 sur sa surface interne. Une lame ressort 43 est montée dans la rainure 55 et fixée par des rivets 56.

La figure 7 illustre la coopération de cette butée amovible 20 avec le reste du dispositif 1. La figure 7 montre la section de la butée amovible 20 et la section de l'élément 10 de première extrémité qui coopère avec la butée amovible 20. La notion de section renvoie à une coupe selon l'axe de déplacement X.

La butée amovible 20 est montée dans une gorge 48 pratiquée dans une portion cylindrique externe 49 de l'élément 10 de première extrémité, cette gorge 48 présentant deux méplats 44. La section de la butée amovible 20 présente une portion de cercle 45 et deux portions linéaires droites 46 ajustées sur l'écartement des méplats 44. La section de la butée amovible présente de plus une portion ouverte 47 permettant le retrait de la butée amovible 20 par rapport à l'élément 10 de première extrémité.

La lame ressort 43 maintient en place la butée amovible 20 sur l'élément 10 de première extrémité.

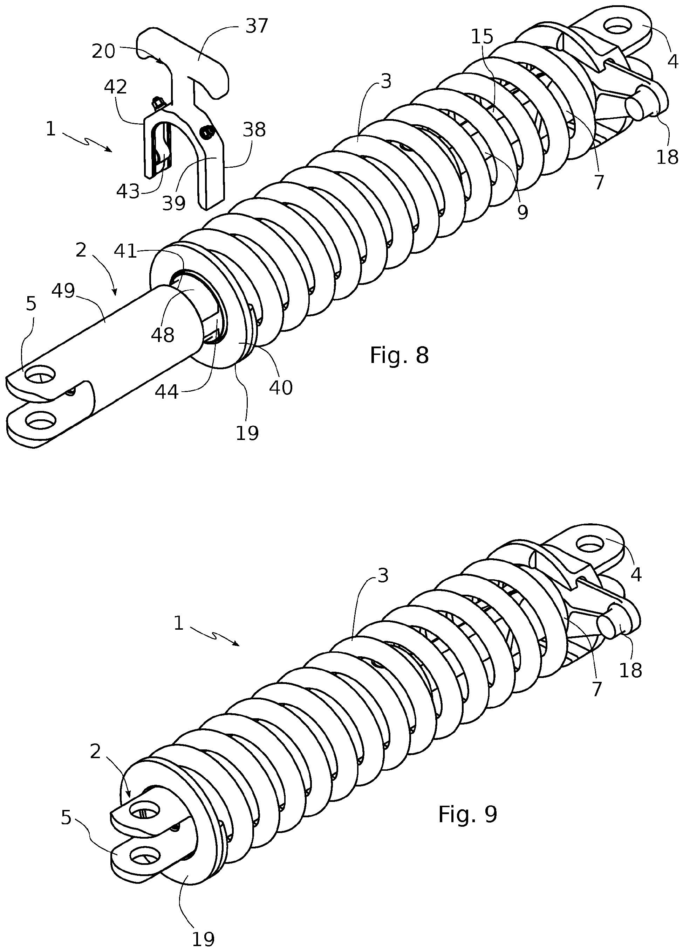

Les figures 8 et 9 illustrent la fonction de débrayage du dispositif d'ouverture d'urgence. Le passage du dispositif 1 de sa position activée en fin de course suite à une ouverture d'urgence (figure 3) à une position débrayée dans laquelle la fermeture de la porte d'aéronef est possible malgré l'activation du dispositif 1 (figure 8) est réalisé par simple manipulation de la butée amovible 20.

A partir de la position de la figure 3, l'utilisateur tire sur la butée amovible 20 par la poignée 37 avec une force suffisante pour déformer élastiquement la lame ressort 43 afin d'extraire la butée amovible 20.

L'élément 11 de deuxième extrémité comporte une ouverture de débrayage 30 qui est entourée par la collerette 19. Le profil de l'élément 10 de première extrémité est ajusté à cette ouverture de débrayage 30 de sorte que l'élément 10 de première extrémité, lorsqu'il est dépourvu de la butée amovible 20, est adapté à coulisser librement dans l'ouverture 19.

L'élément 11 de deuxième extrémité comporte une portion cylindrique interne 50 dans laquelle la portion cylindrique externe 49 de l'élément 10 de première extrémité est adaptée à coulisser.

A partir de la position de la figure 8, l'élément 10 de première extrémité peut donc coulisser librement dans l'ouverture de débrayage 30 de sorte que la porte d'aéronef peut être complètement refermée, ce qui correspond à la position de la figure 9.

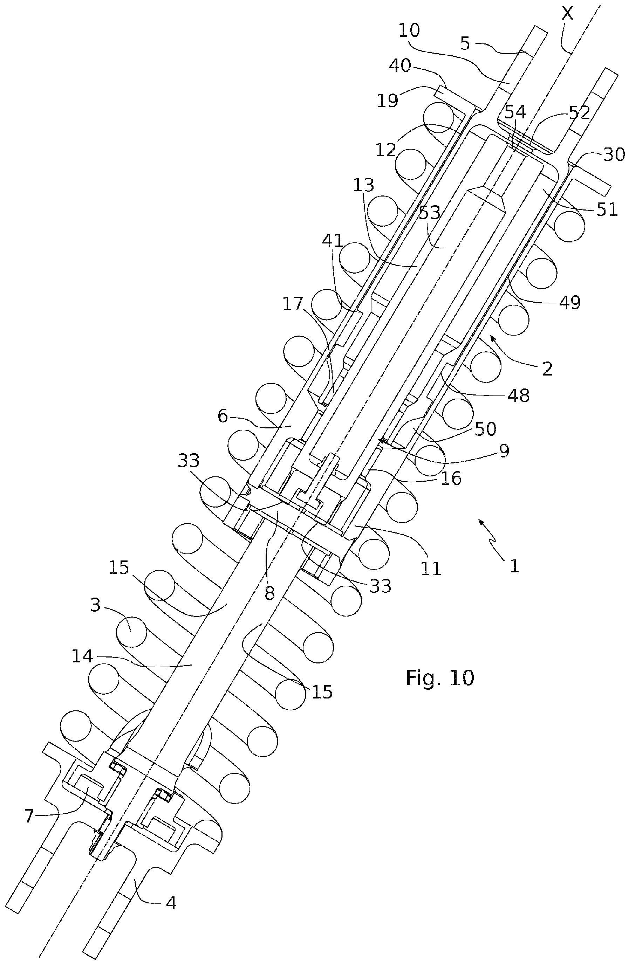

La figure 10 est une vue en coupe du dispositif 1 dans sa position de la figure 9. Dans cette position, l'élément de première extrémité 10 a coulissé le long de la première portion 13 du cylindre de coulissement 9.

A cet effet, l'élément 10 de première extrémité présente une chambre tubulaire d'admission 51 dans laquelle le cylindre de coulissement 9 peut prendre place. La chambre tubulaire d'admission 51 comporte un orifice 52 d'équilibrage des pressions empêchant la formation d'une surpression dans la chambre d'admission 51, ce qui gênerait la fermeture de la porte en mode débrayé. De même, la première portion 13 du cylindre de coulissement 9 comporte une première portion creuse 53 qui est également munie d'un orifice d'équilibrage des pressions 54. Les deux orifices 52, 54 d'équilibrage des pressions sont alignés sur l'axe de déplacement X.

Le cylindre de coulissement 9 regroupe les fonctions de :
- guidage de l'organe de manœuvre 2 en translation selon l'axe de déplacement X ;
- guidage de l'élément 10 de première extrémité en translation par rapport à l'élément 11 de deuxième extrémité aussi bien lors de la fonction d'ouverture de service que pendant le débrayage du dispositif 1 ;
- guidage en rotation du crochet rotatif 7 ;
- maintien angulaire de l'organe de manœuvre 2 empêchant ce dernier de tourner autour de l'axe de déplacement X par rapport à l'élément de butée fixe 4 ;
- butée de fin de course pour l'organe de manœuvre 2, le doigt 8 venant en butée contre l'extrémité 33 de la rainure 15 lorsque le dispositif 1 est dans son état activé (voir figure 4).

Des variantes de réalisation du dispositif 1 peuvent être mises en œuvre sans sortir du cadre de l'invention. Par exemple, le verrouillage de la deuxième extrémité 6 de l'organe de manœuvre 2 peut être réalisé par tout moyen mécanique. De même, la portion cylindrique externe 49 et l'ouverture de débrayage 30 peuvent présenter toute forme à même de s'emboiter l'une dans l'autre lorsque la butée amovible 20 a été enlevée.

## Revendications

1. Dispositif (1) d'ouverture d'urgence d'une porte d'aéronef dotée d'un mécanisme d'ouverture, comprenant :
- des moyens d'actionnement du mécanisme d'ouverture, commutables entre un état passif et un état actif d'activation du mécanisme d'ouverture, et comprenant : un organe de manœuvre tubulaire (2) doté d'une première extrémité (5) de liaison avec la porte, et d'une deuxième extrémité (6) de verrouillage ; des moyens élastiques de compression (3) disposés entre un élément de butée fixe (4) et l'organe de manœuvre (2) ; un organe de retenue (7) de la deuxième extrémité (6) de verrouillage, mobile entre une position fermée de verrouillage de la deuxième extrémité (6) de verrouillage, dans une position de l'organe de manœuvre (2) correspondant à l'état passif des moyens d'actionnement dans laquelle les moyens élastiques (3) sont maintenus comprimés, et une position ouverte de libération de la deuxième extrémité (6) de verrouillage autorisant le déplacement de l'organe de manœuvre (2) selon un axe de déplacement (X) vers une position correspondant à l'état actif des moyens d'actionnement, sous l'effet de l'effort résultant de l'expansion des moyens élastiques (3) ;
- des moyens d'activation (18) des moyens d'actionnement adaptés pour entrainer l'ouverture de l'organe de retenue (7) ;
**caractérisé en ce que** :
- l'organe de manœuvre (2) comporte un élément (10) de première extrémité et un élément (11) de deuxième extrémité mobiles en translation l'un par rapport à l'autre suivant l'axe de déplacement (X), la première extrémité (5) de l'organe de manœuvre (2) étant située sur l'élément (10) de première extrémité et la deuxième extrémité (6) de verrouillage de l'organe de manœuvre (2) étant située sur l'élément (11) de deuxième extrémité ;
- l'élément (10) de première extrémité comporte une butée d'entrainement (20) amovible présentant une première face de contact (38) avec l'élément (11) de deuxième extrémité.

2. Dispositif selon la revendication 1, **caractérisé en ce que** l'élément (10) de première extrémité comporte une portion cylindrique externe (49) emboitable dans une portion cylindrique interne (50) de l'élément (11) de deuxième extrémité.

3. Dispositif selon la revendication 2, **caractérisé en ce que** la butée d'entrainement amovible (20) est montée dans une gorge (48) pratiquée dans la portion cylindrique externe (49) de l'élément (10) de première extrémité.

4. Dispositif selon l'une quelconque des revendications précédentes, **caractérisé en ce que** l'élément (10) de première extrémité comporte au moins un méplat (44), et **en ce que** la butée d'entrainement amovible (20) comporte une surface plane maintenue contre ce méplat (44).

5. Dispositif selon la revendication 4, **caractérisé en ce que** l'élément de première extrémité comporte deux méplats (44) diamétralement opposés, et **en ce que** la section de la butée d'entrainement amovible (20) présente une portion de cercle (45) prolongée par deux portions droites (46) ajustées à l'écartement des méplats (44), ainsi qu'une portion ouverte (47) permettant le retrait de la butée d'entrainement amovible (20) par rapport à l'élément (11) de première extrémité.

6. Dispositif selon l'une quelconque des revendications précédentes, **caractérisé en ce que** la butée d'entrainement amovible (20) comporte un élément élastique (43) de retenue contre l'élément (10) de première extrémité.

7. Dispositif selon l'une quelconque des revendications précédentes, **caractérisé en ce que** la butée d'entrainement amovible (20) comporte une poignée (37).

8. Dispositif selon l'une quelconque des revendications précédentes, **caractérisé en ce que** l'élément (11) de deuxième extrémité comporte une collerette (19) d'appui des moyens élastiques de compression (3), cette collerette (19) présentant une face d'appui (40) coopérant avec la première face de contact (38) de la butée d'entrainement amovible (20).

9. Dispositif selon l'une quelconque des revendications précédentes, **caractérisé en ce qu'**il comporte un cylindre de coulissement (9) coaxial avec l'axe de déplacement (X), l'élément (10) de première extrémité et l'élément (11) de deuxième extrémité étant montés coulissants sur ce cylindre de coulissement (9).

10. Dispositif selon la revendication 9, **caractérisé en ce que** le cylindre de coulissement (9) comporte une butée de fin de course (33) pour l'organe de manœuvre (2).

11. Dispositif selon l'une des revendications 9 ou 10, **caractérisé en ce que** l'élément (10) de première extrémité comporte une chambre tubulaire d'admission (51) du cylindre de coulissement (9).

12. Dispositif selon la revendication 11, **caractérisé en ce que** la chambre tubulaire d'admission (51) comporte un orifice (52) d'équilibrage des pressions.

13. Dispositif selon l'une des revendications 11 ou 12, **caractérisé en ce que** le cylindre de coulissement (9) comporte une première portion creuse (53) munie d'un orifice (54) d'équilibrage des pressions.

14. Dispositif selon la revendication 12 et la revendication 13, **caractérisé en ce que** l'orifice (52) d'équilibrage des pressions de la chambre tubulaire d'admission (51) et l'orifice (54) d'équilibrage des pressions du cylindre de coulissement (9) sont tous deux alignés sur l'axe de déplacement (X).

## Patentansprüche

1. Notöffnungsvorrichtung (1) für eine Luftfahrzeugtür, die mit einem Öffnungsmechanismus versehen ist, umfassend:
- Mittel zur Betätigung des Öffnungsmechanismus, die zwischen einem passiven Zustand und einem aktiven Zustand der Betätigung des Öffnungsmechanismus schaltbar sind und Folgendes umfassen: ein rohrförmiges Bedienglied (2), das mit einem ersten Ende (5) zur Verbindung mit der Tür und mit einem zweiten Ende (6) zur Verriegelung versehen ist, federnde Druckmittel (3), die zwischen einem feststehenden Anschlagelement (4) und dem Bedienglied (2) angeordnet sind, ein Glied (7) zum Halten des zweiten Endes (6) zur Verriegelung, das zwischen einer geschlossenen Stellung zur Verriegelung des zweiten Endes (6) zur Verriegelung, wobei sich das Bedienglied (2) in einer Stellung befindet, die dem passiven Zustand der Betätigungsmittel entspricht, in der die federnden Mittel (3) komprimiert gehalten werden, und einer geöffneten Stellung zur Freigabe des zweiten Endes (6) zur Verriegelung beweglich ist, wodurch die Verschiebung des Bedienglieds (2) gemäß einer Verschiebungsachse (X) unter Wirkung der sich aus dem Ausdehnen der federndem Mittel (3) ergebenden Kraft in eine Position, die dem aktiven Zustand der Betätigungsmittel entspricht, gestattet wird,
- Mittel (18) zur Aktivierung der Betätigungsmittel, die zum Antrieb des Öffnens des Halteglieds (7) ausgeführt sind,
**dadurch gekennzeichnet ist, dass**:
- das Bedienglied (2) ein erstes Endelement (10) und ein zweites Endelement (11) aufweist, die bezüglich einander gemäß der Verschiebungsachse (X) translationsbeweglich sind, wobei das erste Ende (5) des Bedienglieds (2) an dem ersten Endelement (10) angeordnet ist und das zweite Ende (6) zur Verriegelung des Bedienglieds (2) an dem zweiten Endelement (11) angeordnet ist,
- das erste Endelement (10) einen abtrennbaren Antriebsanschlag (20) aufweist, der eine erste Kontaktfläche (38) mit dem zweiten Endelement (11) aufweist.

2. Vorrichtung nach Anspruch 1, **dadurch gekennzeichnet, dass** das erste Endelement (10) einen zylindrischen Außenabschnitt (49) aufweist, der in einen zylindrischen Innenabschnitt (50) des zweiten Endelements (11) einsteckbar ist.

3. Vorrichtung nach Anspruch 2, **dadurch gekennzeichnet, dass** der abtrennbare Antriebsanschlag (20) in einer Auskehlung (48) in dem zylindrischen Außenabschnitt (49) des ersten Endelements (10) montiert ist.

4. Vorrichtung nach einem der vorhergehenden Ansprüche, **dadurch gekennzeichnet, dass** das erste Endelement (10) mindestens eine Abflachung (44) aufweist und dass der abtrennbare Antriebsanschlag (20) eine gegen diese Abflachung (44) gehaltene ebene Fläche aufweist.

5. Vorrichtung nach Anspruch 4, **dadurch gekennzeichnet, dass** das erste Endelement zwei diametral gegenüberliegende Abflachungen (44) aufweist und dass der Querschnitt des abtrennbaren Antriebsanschlags (20) einen Kreisabschnitt (45), der durch zwei gerade Abschnitte (46) verlängert ist, die auf den Abstand der Abflachungen (44) eingestellt sind, sowie einen offenen Abschnitt (47) aufweist, der das Zurückziehen des abtrennbaren Antriebsanschlags (20) bezüglich des ersten Endelements (11) gestattet.

6. Vorrichtung nach einem der vorhergehenden Ansprüche, **dadurch gekennzeichnet, dass** der abtrennbare Antriebsanschlag (20) ein Element (43) zum federnden Halten an dem ersten Endelement (10) aufweist.

7. Vorrichtung nach einem der vorhergehenden Ansprüche, **dadurch gekennzeichnet, dass** der abtrennbare Antriebsanschlag (20) einen Griff (37) aufweist.

8. Vorrichtung nach einem der vorhergehenden Ansprüche, **dadurch gekennzeichnet, dass** das zweite Endelement (11) einen Bund (19) zum Stützen der federnden Druckmittel (3) aufweist, wobei dieser Bund (19) eine Stützfläche (40) aufweist, die mit der ersten Kontaktfläche (38) des abtrennbaren Antriebsanschlags (20) zusammenwirkt.

9. Vorrichtung nach einem der vorhergehenden Ansprüche, **dadurch gekennzeichnet, dass** sie einen koaxial zu der Verschiebungsachse (X) verlaufenden Schiebezylinder (9) aufweist, wobei das erste Endelement (10) und das zweite Endelement (11) auf diesem Schiebezylinder (9) verschiebbar montiert sind.

10. Vorrichtung nach Anspruch 9, **dadurch gekennzeichnet, dass** der Schiebezylinder (9) einen Endanschlag (33) für das Bedienglied (2) aufweist.

11. Vorrichtung nach einem der Ansprüche 9 oder 10, **dadurch gekennzeichnet, dass** das erste Endelement (10) eine rohrförmige Kammer (51) zur Aufnahme des Schiebezylinders (9) aufweist.

12. Vorrichtung nach Anspruch 11, **dadurch gekennzeichnet, dass** die rohrförmige Aufnahmekammer (51) eine Druckausgleichsöffnung (52) aufweist.

13. Vorrichtung nach einem der Ansprüche 11 oder 12, **dadurch gekennzeichnet, dass** der Schiebezylinder (9) einen ersten hohlen Abschnitt (53) aufweist, der mit einer Druckausgleichsöffnung (54) versehen ist.

14. Vorrichtung nach Anspruch 12 und Anspruch 13, **dadurch gekennzeichnet, dass** sowohl die Druckausgleichsöffnung (52) der rohrförmigen Aufnahmekammer (51) als auch die Druckausgleichsöffnung (54) des Schiebezylinders (9) auf die Verschiebungsachse (X) ausgerichtet sind.

## Claims

1. An emergency opening device (1) for an aircraft door provided with an opening mechanism, comprising:
- means for actuating the opening mechanism, that can be switched between a passive state and an active state of activation of the opening mechanism, and comprising: a tubular operating member (2) provided with a first end (5) linking with the door, and a locking second end (6); elastic compression means (3) disposed between a fixed stop element (4) and the operating member (2); a retaining member (7) for the locking second end (6), that can move between a closed position of locking of the locking second end (6), in a position of the operating member (2) corresponding to the passive state of the actuation means in which elastic means (3) are kept compressed, and an open position of releasing of the locking second end (6) allowing the displacement of the operating member (2) on an axis of displacement (X) to a position corresponding to the active state of the actuation means, under the effect of the effort resulting from the expansion of the elastic means (3);
- activation means (18) for the actuation means suitable for driving the opening of the retaining member (7);
**characterized in that**:
- the operating member (2) comprises a first end element (10) and a second end element (11) that can move in translation with respect to one another on the axis of displacement (X), the first end (5) of the operating member (2) being situated on the first end element (10) and the locking second end (6) of the operating member (2) being situated on the second end element (11);
- the first end element (10) comprises a removable driving stop (20) having a first face (38) for contacting the second end element (11).

2. The device as claimed in claim 1, **characterized in that** the first end element (10) comprises an outer cylindrical portion (49) that can be fitted into an inner cylindrical portion (50) of the second end element (11).

3. The device as claimed in claim 2, **characterized in that** the removable driving stop (20) is mounted in a groove (48) formed in the outer cylindrical portion (49) of the first end element (10).

4. The device as claimed in any one of the preceding claims, **characterized in that** the first end element (10) comprises at least one flat section (44), and **in that** the removable driving stop (20) comprises a flat surface held against this flat section (44).

5. The device as claimed in claim 4, **characterized in that** the first end element comprises two diametrically opposite flat sections (44), and **in that** the section of the removable driving stop (20) has a circular portion (45) prolonged by two straight portions (46) fitted to the distance between the flat sections (44), and an open portion (47) allowing the removable driving stop (20) to be removed from the first end element (11).

6. The device as claimed in any one of the preceding claims, **characterized in that** the removable driving stop (20) comprises an elastic element (43) for retention against the first end element (10).

7. The device as claimed in any one of the preceding claims, **characterized in that** the removable driving stop (20) comprises a handle (37).

8. The device as claimed in any one of the preceding claims, **characterized in that** the second end element (11) comprises a bearing flange (19) for the elastic compression means (3), this flange (19) having a bearing face (40) cooperating with the first contact face (38) of the removable driving stop (20).

9. The device as claimed in any one of the preceding claims, **characterized in that** it comprises a sliding cylinder (9) coaxial with the axis of displacement (X), the first end element (10) and the second end element (11) being mounted to slide on this sliding cylinder (9).

10. The device as claimed in claim 9, **characterized in that** the sliding cylinder (9) comprises a travel end stop (33) for the operating member (2).

11. The device as claimed in one of claims 9 and 10, **characterized in that** the first end element (10) comprises a tubular admission chamber (51) for the sliding cylinder (9).

12. The device as claimed in claim 11, **characterized in that** the tubular admission chamber (51) comprises a pressure balancing orifice (52).

13. The device as claimed in one of claims 11 and 12, **characterized in that** the sliding cylinder (9) comprises a first hollow portion (53) provided with a pressure balancing orifice (54).

14. The device as claimed in claim 12 and claim 13, **characterized in that** the pressure balancing orifice (52) of the tubular admission chamber (51) and the pressure balancing orifice (54) of the sliding cylinder (9) are both aligned on the axis of displacement (X).
